# EUROPEAN PATENT SPECIFICATION

(11) **EP 3 236 333 B1**
(45) Date of publication and mention of the grant of the patent: **05.08.2020**
(21) Application number: 17164974.2
(22) Date of filing: 05.04.2017
(51) Int. Cl.: G05D 7/01, G05D 16/02, G05D 16/06, G05D 16/00

(54) **ORIFICE WITH DYNAMICALLY REDUCEABLE SIZE IN PRESSURE CONDUIT**
DYNAMISCH REDUZIERBARE ÖFFNUNG IN EINER DRUCKLEITUNG
ORIFICE A TAILLE DYNAMIQUEMENT VARIABLE DANS UN CONDUIT DE PRESSION

(30) Priority: 07.04.2016 DK 201600208
(43) Date of publication of application: 25.10.2017
(73) Proprietor: Danfoss A/S, 6430 Nordborg (DK)
(72) Inventor: DROBEZ , Benjamin, 1000 Ljubljana (SI); OBLAK, Uros, 1215 Medvode (SI); ZAGAR, Tomaz, 1357 Notranje Gorice (SI)
(74) Representative: Stevens, Brian

(56) References cited:
- GB-A- 2 270 363
- US-A- 2 937 658
- US-A- 3 447 775
- US-A- 3 566 902
- US-A- 5 890 518
- US-A1- 2009 092 936

## Description

### BACKGROUND

In heating and / or cooling flow systems communicating a heat transferring fluid to and from a range of heat exchanging devices where these further may be connected to loads such as for radiators, floor heating installation, heating of domestic water, cooling, HVAC, district heating systems etc., it is well known that at least one of the valves is connected to a pressure actuator comprising pressure communicating conduits, such as impulse tubes, where these include a low pressure connection and high pressure connection. The low pressure connection may be connected to the flow system or may be open to atmosphere (or any other pressure stage) to regulate pressure relative to atmosphere pressure, whereas the high pressure connection typically is connected to the flow system.

A document, US 3 566 902 discloses a fluid flow system having at least two flow branches whose pressure drop variations with flow rate changes are different, a flexible orifice is placed in a branch with the lesser pressure drop. The pressure drop across this orifice, which expands with increasing flow rate, tends to balance the pressure drop in the other branch or branches so as to make possible predetermined control of the fluid flow in the system.

These pressure communicating conduits connect the pressure actuator to two positions in the flow system to respond to a differential pressure in the regulation of the connected valve, or alternatively to one point of the flow system and to open air respectively, to respond to absolute pressure change. They have an orifice with reduced diameter (especially that for the high-pressure connection) to reduce the pressure impulse from the flow system to the pressure actuator (damping of pressure signal). If this pressure impulse signal speed is not being reduced, then the oscillations may occur on the pressure actuator due to fast pressure changes in the flow system.

Using fixed orifices however leads to two problems.

The first being clogging; due to the reduced diameter of the orifice debris, particles etc. in the fluid the will be at a higher risk of clogging of connection.

The second problem is that the pressure signal in this manner is constantly damped all the time, even when the speed of the pressure signal is slow.

Therefore the time-constant of the pressure actuator is increased, also when this is not required. The performance of the controller thus is reduced in all operating points and therefore the dynamic response is reduced.

The present invention aims to introduce a solution to either the first or both of these problems.

### SUMMARY OF THE INVENTION

Especially the first problem is solved by a pressure actuator according to claim 1. The dynamically changing opening helps to remove the particles that otherwise would tend to clog the opening area, a problem which is especially the case for the high pressure conduit connection where the present system thus with advantage could be implemented.

The dynamically changing opening could in an embodiment be implemented as a flexible insert inserted into said pressure communicating conduit, and comprising an opening forming a reduced orifice, this would also help preventing particles from settling in the opening area as they are less pronounced to settle on such flexible surfaces. In embodiments the insert is a membrane or a diaphragm, and/or is made of a material like rubber.

To assist the opening in forming significant changes in the opening size it may include one or more slits forming one connected shaped opening.

To make the system easy to assembly in an embodiment the flexible insert is fixed between an upper part and a lower part of said conduit to the actuator. In one embodiment, one of said an upper part and a lower part forms an integral part of the actuator and/or the other is to be connected to a conduit.

In an alternative or additional embodiment solving the first and second problem, the pressure actuator include a conduit comprising a cavity and where a membrane is fixed within said cavity separating it into two sections forming pressure champers at the opposing sides of the membrane, where said membrane operates such that its deflection in response to a pressure difference over the membrane defines an opening for the fluid flow. Again the changing opening assist particles in escaping rather than clogging the opening area, and further the impulse signal is affected in a controlled manner.

In an embodiment an element comprising holes is connected to said membrane and where said holes operates in relation to a seat such that the distance, d, between the element and the seat defines an opening area for the fluid flow to pass, the fluid holes forming part of the flow passage. The flow thus passes the membrane through the holes of the connected element, and as the pressure difference over the membrane changes the deflection of the membrane changes the distance, d, and thus regulates the flow rate through the holes and thereby also the impulse signal.

In one embodiment the element is disc shaped and forming part of a nozzle connected to said membrane within said flow passage.

In one embodiment said holes are positioned to encircle a centre of said element operating with a similar circular shaped seat.

To give a setting of the control at least one biasing member is connected to the membrane in a biasing manner.

To give a compact and stable construction, the element is positioned within a cylinder forming part of the flow passage and is connected to and deflects with said membrane, where said biasing member may be encircling said cylinder. Again, to ease the assembly of said system said housing of said membrane and cavity are formed of an upper housing and a lower housing.

### FIGURES

- Fig. 1: An illustration of a flow system including a valve connected to an actuator having conduits connecting it to different positions of the flow system.
- Fig. 2A: Reduced orifices in a conduit formed of a flexible insert.
- Fig. 2B: Reduced orifices in a conduit formed of a membrane within a pressure chamber.
- Fig 3: Further embodiment with improved damping and clogging performances.

### DETAILED DESCRIPTION OF THE INVENTION

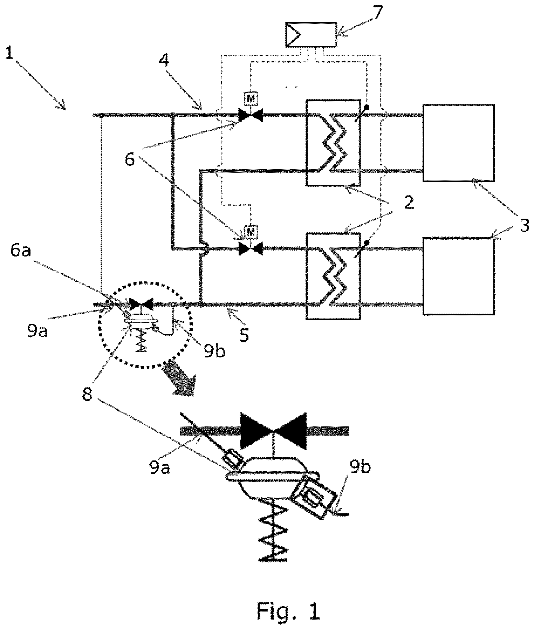

Figure 1 illustrates a typical heating and / or cooling flow system (1) communicating a heat transferring fluid to and from a range of heat exchanging (2) devices where these further may be connected to loads (3), such as for radiators, floor heating installation, heating of domestic water, cooling, HWAC, district heating systems etc.

The heat exchanging devices (2) may be connected to forward flow lines (4) and return flow lines (5), and the flows may be controlled by flow regulating valves (6) optionally being regulated in response to a signal from a controller (7).

At least one of the valves (6a) is connected to a pressure actuator (8) comprising pressure communicating conduits, the low pressure connection (9a) and high pressure connection (9b), or in the following referred to as impulse tubes, connecting it in a pressure communication to two positions at the flow system (1), in the illustration this is at a return line (5) the two impulse tubes (9a) and (9b) being connected at opposite sides of the return line (5) relative to the valve (6a) being in control communication with the pressure actuator (8), but they valve (6a) and impulse tubes (9a) and (9b) may be positioned anywhere according to the required operation of the valve (6a).

The pressure actuator (8) may be of any kind assisting to react to regulate the flow rate through the connected valve (6a) in response to a change in the differential pressure between the two impulse tubes (9a) and (9b), such as by deflecting a membrane as it is commonly known.

These impulse tubes (9a) and (9b) usually have an orifice with reduced diameter, such as for the high-pressure connection (9b). The purpose of the orifice is to reduce the pressure impulse from flow system (1) to the pressure actuator (8) (damping of pressure signal). If this pressure impulse signal speed is not being reduced, then the oscillations may occur on the pressure actuator (8) due to fast pressure changes in the flow system (1).

This however leads to two problems. The first being clogging; due to the reduced diameter of the orifice debris, particles etc. in the fluid the will be at a higher risk of clogging of connection.

A second problems is that the pressure signal in this manner is constantly is damped all the time, even when the speed of the pressure signal is slow. Therefore the time-constant of the pressure actuator is increased, also when this is not required. The performance of the controller thus is reduced in all operating points and therefore the dynamic response is reduced.

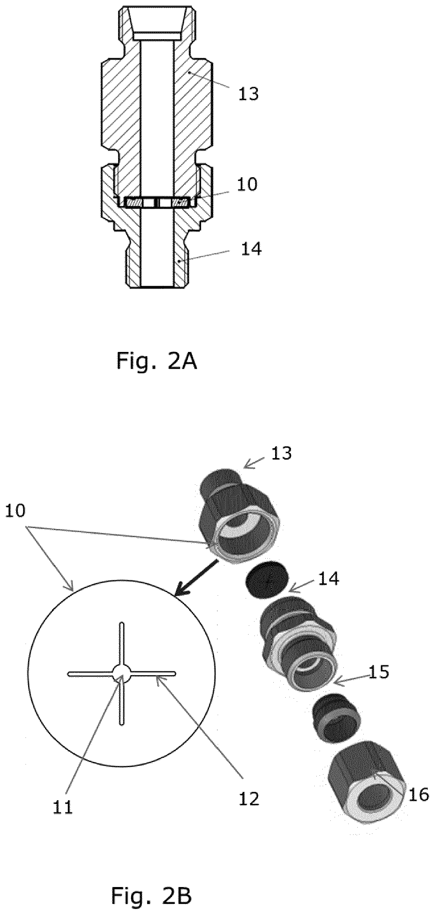

In one simple embodiment the first problem is solved by the flexible membrane insert (10) as seen in figure 2A and 2B. The constructions illustrate a flexible insert (10), such as a membrane or diaphragm, is inserted into an impulse tube (9a) or (9b), where comprises an opening (11) forming the reduced orifice of the impulse tube (9a, 9b), where the opening (11) may include one or more slits (12) and may be formed as one connected shaped opening (11) or several openings (11) of similar og different designs. The flexible insert (10) needs to be of a thickness giving a sufficient flexibility according to the design requirements, not too much and not too little flexibility. In one embodiment it is formed of a rubber material.

In one embodiment the flexible insert (10), or at least its surface, is formed of a material that itself helps to inhibit materials from settling on the surface such as to end up clogging the passage through the impulse tube (9a, 9b), where one such material could be Teflon. The material needs to be able to maintain the flexibility through the temperature range it may experience.

The formation with the slits (12) formed in the opening, such as the illustrated cross shape of the opening (11) assist the size of the opening (11) to dynamically changing according to the pressure changes and the fluid flows through the opening (11), just as it may deflect if the size of the opening (11) of some reason reduces e.g. due to materials fully or partly blocking it, and thus assist in in removing the materials by flexing.

In the embodiment having an opening (11), such as a centre opening as illustrated, where slits (12) reach out from the opening (11) being connected to it, when a particle clogs the opening (11), the pressure on one side increases and pushes the particle through. In this way the particles are flown away and the clogging is reduced or even removed. Further, the sediments, debris etc. that are present in fluid is less affine to adhere to a deformable material.

In the illustrated embodiment of figs. 2A and 2B the flexible membrane insert (10) is fixed between an upper part (13) and a lower part (14) of the connection of the impulse tube (9a, 9b) to the pressure actuator (8), where the one optionally could be an integral part of the pressure actuator (8) and/or the other part of the impulse tube (9a, 9b), or as illustrated in the embodiment of fig. 2B the lower part (14) is to be connected to an impulse tube (9a, 9b) through sealing means (15) and fixing means (16).

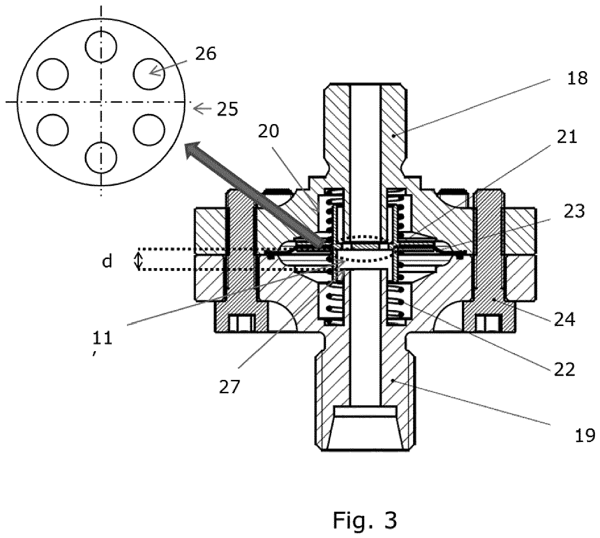

Fig. 3 illustrates a more advanced solution embodiment solving both of the problems, where an upper housing (18) and lower housing (19) defining a cavity (20) between them. In this cavity (20) is positioned a nozzle (21) in connection to biasing members (22), or in the following more specifically referred to as a springs though any device taking a similar operation would apply, and a membrane (23) separating the cavity (20) into two sections forming pressure champers at the opposing sides of the membrane (23).

The fluid passes through a flow passage of the combined two parts (18, 19) and the pressure difference of the fluids over the membrane (23) will deflect it, where the degree of deflection will be dictated by the springs (22) in the known manner of membrane pressure actuators. In the illustrated embodiment each of the two sections of the cavity (20) comprises a spring connected to the opposing sides of the membrane (23) holding it in a neutral position when not affected by any other forces.

The nozzle (21) includes a disc (25) forming an obstacle to the flow through the flow passage through the combined two parts (18, 19), where the disc (25) includes one or more holes (26). The may come in any number, sizes and designs and be positioned in the disc (25) in any manner. The illustration of fig. 3 shows six holes (26) positioned in a circular manner.

The fluid flows through the holes (26) as it passes the flow passage, and a seat (27), or throttle, within cavity (20) operates in connection to the holes (26) such that the distance, d, between the disc (25) and the seat (27) defines an opening (11') area for the fluid flow to pass. The smaller distance, d, the smaller opening (11') area and thus a lower flow rate passes the flow passage at a given pressure difference, or pressure drop over the membrane (23), also referred to as the differential pressure.

When thus this pressure drop is low, or close to zero, the disc (25) remains close to the neutral position, but when the pressure drop increases the pressure drop on the disc (25) and membrane (23) increases pushing the disc (25) towards the seat (27) compressing a spring (22) and reducing the distance, d. The opening (11') area for the fluid flow is thus reduced and consequently the damping of the signal is increased.

This embodiment design thus solves the second problem of constant damping due to the moving parts and adjustable opening area for the flow. But also the first problem of 'clogging' is attended since when the disc changes position changing the opening (11') area the clogging elements gets chances to flow away and thus to be removed.

In the illustrated embodiment the disc (25) is positioned within a cylinder (28) forming part of the flow passage the flow path and is connected to and deflects with said membrane (23), where the spring (22) encircles said cylinder (23), this enabling a compact design where the parts helps to stabilize each other during the operation.

In the illustrated embodiment the upper housing (18) and lower housing (19) are held together by a bolt (24), but any other means of fixing such two parts together would also apply to the present system.

A dynamic damping of the impulse signals thus is introduced which in further advanced embodiment could include means detecting oscillations in the impulses, such as by measuring the position of the differential pressure controller, in the embodiment of fig. 3 including the membrane (23) and nozzle (21) with disc (25) operating with seat (27), or by measuring the differential pressure or temperature. By using such input data for calculation algorithms to identify oscillations from normal system operation state, a controller then actively would adjust orifice opening in the impulse tube (9a, 9b) by any means as known in the art.

## Claims

1. A pressure actuator (8) for controlling a valve (6a) connected to a heating and/or cooling flow system (1), where the pressure actuator (8) comprises two conduits (9a, 9b), a low pressure communicating conduit (9a) which may be connected to said flow system (1), and high pressure communicating conduit (9b) connected to a different position of said flow system (1), to react to regulate the flow rate through the connected valve (6a) in a response to a change in the differential pressure over the positions of said flow system (1) whereto the respectively said low pressure communication conduit (9a) and said high pressure communication conduit (9b) are connected, **characterized in that** one of said conduits (9a, 9b) comprises a flow passage with a reduced orifice section having an opening (11, 11') dynamically changing according to the differential pressure over the reduced orifice section comprised in one of said two conduits (9a) or (9b).

2. A pressure actuator (8) according to claim 1, where said dynamically changing opening (11, 11') is present in the high pressure communicating conduit (9b).

3. Pressure actuator (8) according to claim 1 or 2, where a flexible insert (10) is positioned in said conduit (9a, 9b) comprising said opening (11), said flexible insert (10) forming the reduced orifice.

4. Pressure actuator (8) according to claim 3, where the opening (11) includes one or more slits (12) forming one connected shaped opening (11).

5. Pressure actuator (8) according to claim 4, where the flexible insert (10) is fixed between an upper part (13) and a lower part (14) of said pressure communicating conduit, (9a, 9b) to the pressure actuator (8).

6. Pressure actuator (8) according to claim 5, where one of said an upper part (13) and a lower part (14) forms an integral part of the pressure actuator (8) and/or the other is to be connected to said conduit (9a, 9b).

7. Pressure actuator (8) according to claim 1 or 2, where said conduit (9a, 9b) comprises a cavity (20) and where a membrane (23) is fixed within said cavity (20) separating it into two sections forming pressure chambers at the opposing sides of the membrane (23), where said membrane operates such that its deflection in response to a pressure difference over the membrane (23) defines an opening (11, 11') for the fluid flow.

8. Pressure actuator (8) according to claim 7, where an element (25) comprising holes (26) is connected to said membrane (23) and where said holes (26) operates in relation to a seat (27) such that the distance, d, between the element (25) and the seat (27) defines an opening (11, 11') area for the fluid flow to pass, the fluid holes (26) forming part of the flow passage.

9. Pressure actuator (8) according to claim 8, where in the element (25) is disc shaped and forming part of a nozzle (21) connected to said membrane (23) within said flow passage.

10. Pressure actuator (8) according to claim 8 or 9, where said holes (26) are positioned to encircle a centre of said element (25) operating with a similar circular shaped seat (27).

11. Pressure actuator (8) according to one of claims 7-10, wherein at least one biasing member (22) is connected to the membrane (23) in a biasing manner.

12. Pressure actuator (8) according to one of claims 8-11, wherein the element (25) is positioned within a cylinder (28) forming part of the flow passage and is connected to and deflects with said membrane (23).

13. Pressure actuator (8) according to claim 11 and 12, where said biasing member (22) encircles said cylinder (23).

14. Pressure actuator (8) according to one of claims 7-13, wherein said housing of said membrane (23) and cavity (20) are formed of an upper housing (18) and a lower housing (19).

## Patentansprüche

1. Druckaktor (8) zum Steuern eines Ventils (6a), das mit einem Heiz- und/oder Kühlflusssystem (1) verbunden ist, wobei der Druckaktor (8) zwei Leitungen (9a, 9b) umfasst, die eine Niederdruckkommunikationsleitung (9a), die mit dem Durchflusssystem (1) verbunden werden kann, und eine Hochdruckkommunikationsleitung (9b), die mit einer anderen Position des Durchflusssystems (1) verbunden ist, umfassen, um zu reagieren, um die Durchflussrate durch das verbundene Ventil (6a) hindurch in einer Reaktion auf eine Änderung in dem Differentialdruck über den Positionen des Durchflusssystems (1) zu regulieren, mit denen die jeweilige Niederdruckkommunikationsleitung (9a) und die Hochdruckkommunikationsleitung (9b) verbunden sind, **dadurch gekennzeichnet, dass** eine der Leitungen (9a, 9b) eine Durchflusspassage mit einem reduzierten Drosselblendenabschnitt mit einer Öffnung (11, 11') aufweist, die sich dynamisch gemäß dem Differentialdruck über dem reduzierten Drosselblendenabschnitt ändert, der in einer der beiden Leitungen (9a) oder (9b) vorhanden ist.

2. Druckaktor (8) nach Anspruch 1, wobei die sich dynamisch ändernde Öffnung (11, 11') in der Hochdruckkommunikationsleitung (9b) vorhanden ist.

3. Druckaktor (8) nach Anspruch 1 oder 2, wobei ein flexibler Einsatz (10) in der Leitung (9a, 9b) positioniert wird, die die Öffnung (11) umfasst, wobei der flexible Einsatz (10) die reduzierte Drosselblende bildet.

4. Druckaktor (8) nach Anspruch 3, wobei die Öffnung (11) einen oder mehrere Schlitze (12) einschließt, die eine verbundene geformte Öffnung (11) bilden.

5. Druckaktor (8) nach Anspruch 4, wobei der flexible Einsatz (10) zwischen einem oberen Teil (13) und einem unteren Teil (14) der Druckkommunikationsleitung (9a, 9b) mit dem Druckaktor (8) verbunden ist.

6. Druckaktor (8) nach Anspruch 5, wobei eins von dem einen oberen Teil (13) und einem unteren Teil (14) einen integralen Teil des Druckaktors (8) bildet und/oder der andere mit der Leitung (9a, 9b) zu verbinden ist.

7. Druckaktor (8) nach Anspruch 1 oder 2, wobei die Leitung (9a, 9b) einen Hohlraum (20) umfasst, und wobei eine Membran (23) innerhalb des Hohlraums (20) fixiert ist, wodurch sie in zwei Abschnitte getrennt wird, die an den entgegengesetzten Seiten der Membran (23) Druckkammern bilden, wobei die Membran so arbeitet, dass ihre Auslenkung in Reaktion auf eine Druckdifferenz über der Membran (23) eine Öffnung (11, 11') für den Fluiddurchfluss definiert.

8. Druckaktor (8) nach Anspruch 7, wobei ein Element (25), welches Löcher (26) umfasst, mit der Membran (23) verbunden ist, und wobei die Löcher (26) in Beziehung zu einem Sitz (27) arbeiten, so dass der Abstand, d, zwischen dem Element (25) und dem Sitz (27) eine Fläche der Öffnung (11, 11') definiert, die der Fluiddurchfluss passieren kann, wobei die Fluidlöcher (26) einen Teil der Durchflusspassage bilden.

9. Druckaktor (8) nach Anspruch 8, wobei das Element (25) scheibenförmig ist und einen Teil einer Düse (21) bildet, die innerhalb der Durchflusspassage mit der Membran (23) verbunden ist.

10. Druckaktor (8) nach Anspruch 8 oder 9, wobei die Löcher (26) so positioniert sind, dass sie ein Zentrum des Elements (25) einkreisen, das mit einem ähnlichen kreisförmigen Sitz (27) arbeitet.

11. Druckaktor (8) nach einem der Ansprüche 7 bis 10, wobei mindestens ein Vorspannelement (22) in Vorspannweise mit der Membran (23) verbunden ist.

12. Druckaktor (8) nach einem der Ansprüche 8 bis 11, wobei das Element (25) innerhalb eines Zylinders (28) positioniert ist, der einen Teil der Durchflusspassage bildet und mit der Membran (23) verbunden ist und mit dieser auslenkt.

13. Druckaktor (8) nach Anspruch 11 und 12, wobei das Vorspannelement (22) den Zylinder (23) einkreist.

14. Druckaktor (8) nach einem der Ansprüche 7 bis 13, wobei das Gehäuse der Membran (23) und der Hohlraum (20) aus einem oberen Gehäuse (18) und einem unteren Gehäuse (19) gebildet sind.

## Revendications

1. Actionneur de pression (8) destiné à commander une soupape (6a) raccordée à un système de flux de chauffage et/ou de refroidissement (1), dans lequel l'actionneur de pression (8) comprend deux conduits (9a, 9b), un conduit de communication à basse pression (9a) qui peut être raccordé audit système de flux (1), et un conduit de communication à haute pression (9b) raccordé à une position différente dudit système de flux (1), pour réagir afin de réguler le débit à travers la soupape raccordée (6a) en réponse à un changement de pression différentielle sur les positions dudit système de flux (1) auquel ledit conduit de communication à basse pression (9a) et ledit conduit de communication à haute pression (9b) sont respectivement raccordés, **caractérisé en ce que** l'un desdits conduits (9a, 9b) comprend un passage de flux doté d'une section d'orifice réduit comportant une ouverture (11, 11') variant dynamiquement en fonction de la pression différentielle sur la section d'orifice réduit comprise dans l'un desdits deux conduits (9a) ou (9b).

2. Actionneur de pression (8) selon la revendication 1, dans lequel ladite ouverture variant dynamiquement (11, 11') est présente dans le conduit de communication à haute pression (9b).

3. Actionneur de pression (8) selon la revendication 1 ou 2, dans lequel un insert flexible (10) est positionné dans ledit conduit (9a, 9b) comprenant ladite ouverture (11), ledit insert flexible (10) formant l'orifice réduit.

4. Actionneur de pression (8) selon la revendication 3, dans lequel l'ouverture (11) comprend une ou plusieurs fentes (12) formant une ouverture formée raccordée (11).

5. Actionneur de pression (8) selon la revendication 4, dans lequel l'insert flexible (10) est fixé entre une partie supérieure (13) et une partie inférieure (14) dudit conduit de communication de pression (9a, 9b) sur l'actionneur de pression (8).

6. Actionneur de pression (8) selon la revendication 5, dans lequel l'une de ladite partie supérieure (13) et de ladite partie inférieure (14) forme une partie intégrée de l'actionneur de pression (8) et/ou l'autre doit être raccordée audit conduit (9a, 9b).

7. Actionneur de pression (8) selon la revendication 1 ou 2, dans lequel ledit conduit (9a, 9b) comprend une cavité (20) et dans lequel une membrane (23) est fixée à l'intérieur de ladite cavité (20) la séparant en deux sections formant des chambres de pression sur des côtés opposés de la membrane (23), dans lequel ladite membrane fonctionne de façon que sa déviation en réponse à une différence de pression sur la membrane (23) définisse une ouverture (11, 11') pour le flux de fluide.

8. Actionneur de pression (8) selon la revendication 7, dans lequel un élément (25) comprenant des trous (26) est raccordé à ladite membrane (23) et dans lequel lesdits trous (26) fonctionnent en relation avec une assise (27) de façon que la distance, d, entre l'élément (25) et l'assise (27) définisse une zone d'ouverture (11, 11') pour que ledit flux de fluide passe, les trous de fluide (26) faisant partie du passage de flux.

9. Actionneur de pression (8) selon la revendication 8, dans lequel l'élément (25) est en forme de disque et fait partie d'une buse (21) raccordée à ladite membrane (23) à l'intérieur dudit passage de flux.

10. Actionneur de pression (8) selon la revendication 8 ou 9, dans lequel lesdits trous (26) sont positionnés pour encercler un centre dudit élément (25) fonctionnant avec une assise de forme circulaire similaire (27).

11. Actionneur de pression (8) selon l'une quelconque des revendications 7 à 10, dans lequel au moins un organe de polarisation (22) est raccordé à la membrane (23) de manière à la polariser.

12. Actionneur de pression (8) selon l'une quelconque des revendications 8 à 11, dans lequel l'élément (25) est positionné à l'intérieur d'un cylindre (28) faisant partie du passage de flux et est raccordé à ladite membrane (23) et dévie avec elle.

13. Actionneur de pression (8) selon les revendications 11 et 12, dans lequel ledit organe de polarisation (22) encercle ledit cylindre (23).

14. Actionneur de pression (8) selon l'une quelconque des revendications 7 à 13, dans lequel ledit logement de ladite membrane (23) et de la cavité (20) est formé d'un logement supérieur (18) et d'un logement inférieur (19).
